# EUROPEAN PATENT APPLICATION

(11) **EP 4 831 380 A1**
(43) Date of publication of application: **28.10.2026**
(21) Application number: 24909735.3
(22) Date of filing: 31.07.2024
(51) Int. Cl.: D06F 34/08, D06F 34/20, D06F 33/32

(54) **AUTOMATIC DOOR-OPENING CONTROL METHOD AND APPARATUS, AND HOUSEHOLD APPLIANCE**

(30) Priority: 28.12.2023 CN 202311832958
(71) Applicant: Wuxi Filin Electronics Co., Ltd., Jiangsu 214028 (CN); Wuxi Little Swan Electric Co., Ltd., Wuxi, Jiangsu 214028 (CN)
(72) Inventor: WEI, Wei, Wuxi, Jiangsu 214028 (CN); YANG, Ming, Wuxi, Jiangsu 214028 (CN); GONG, Jian, Wuxi, Jiangsu 214028 (CN)
(74) Representative: RGTH
(86) International application number: PCT/CN2024/108731
(87) International publication number: WO 2025/138781

(57) **Abstract**

Provided is an automatic door-opening control method, comprising: (S110) determining that a door-opening trigger instruction has been received, controlling the rotation of a driving motor, and controlling a position detection component to detect the position of an intermediate transmission component; and (S120) determining that the intermediate transmission component has moved from an initial position to a target position and then left the target position, and controlling the driving motor to stop rotating. The target position represents that a door has been opened by means a door-opening actuator, or indicates the position at which the door can be opened by means of the door-opening actuator during the return movement. Therefore, when it is determined that the intermediate transmission component has left the target position, it is determined that the door has been opened by means of the door-opening actuator, and the driving motor may then be controlled to stop rotating. Further provided is an automatic door-opening control device.

## Description

### CROSS-REFERENCE TO RELATED APPLICATIONS

The present disclosure claims priority from Chinese patent application No. 202311832958.2, entitled "AUTOMATIC DOOR-OPENING CONTROL METHOD AND APPARATUS, AND HOUSEHOLD APPLIANCE" and filed with China National Intellectual Property Administration on December 28, 2023, the entire disclosure of which is incorporated herein by reference.

### TECHNICAL FIELD

The present disclosure relates to the technical field of household appliances, and specifically relates to an automatic door-opening control method and device, and a household appliance.

### BACKGROUND

In order to achieve the convenience of using household appliances such as washing machines, it is proposed in the related art to provide an automatic door-opening device in the household appliance. After the household appliance completes its main function, the automatic door-opening device is controlled to act, applying a force to the door to achieve automatic opening of the door. When users want to actively control the household appliance to open the door, they can also achieve automatic opening of the door by operating a control button to issue a door-opening instruction to the automatic door-opening device.

In specific implementation, the automatic door-opening device comprises a driving motor, a transmission mechanism, a door-opening actuator, and a position detection component. The position detection component determines that the door-opening actuator has operated to a specific state by detecting the position of a specific transmission component in the transmission mechanism. Then, the driving motor is controlled to rotate for a specific duration, so that the door can be opened and the door-opening actuator can be reset. However, the above control strategy for controlling the action of the door-opening actuator does not have negative feedback. Although the motor is controlled to rotate for a set duration under high loads, it cannot guarantee that the door has automatically opened and the specific transmission component has been correctly reset.

### SUMMARY

### (1) Technical problem to be solved

The technical problem to be solved by the present disclosure is to solve the problem that during door-opening control in existing automatic door-opening devices, after the position detection component detects that a specific transmission component in the transmission mechanism has moved to a target position, the driving motor runs for a set duration before being powered off, which may make the door fail to automatically open or the specific transmission component fail to reset correctly.

### (2) Technical solution

In order to solve the above technical problem, the present disclosure provides an automatic door-opening control method and device, and a household appliance.

In a first aspect, the present disclosure provides an automatic door-opening control method, for controlling an automatic door-opening device to achieve automatic opening of a door; where the automatic door-opening device comprises a driving motor, a transmission mechanism, a door-opening actuator, and a position detection component; the transmission mechanism comprises an intermediate transmission component, and the position detection component is used to detect the position of the intermediate transmission component; and the method comprises:
determining that a door-opening trigger instruction is received, controlling the driving motor to rotate, and controlling the position detection component to detect the position of the intermediate transmission component; and
determining that the intermediate transmission component has moved from an initial position to a target position and then has left the target position, and controlling the driving motor to stop rotating.

Optionally, the position detection component is a two-state detection component;
the determining that the intermediate transmission component has moved from an initial position to a target position and then has left the target position comprises:
in response to a detection state of the position detection component switching from a first state to a second state, determining that the intermediate transmission component has moved from the initial position to the target position; and
in response to the position detection component switching back from the second state to the first state, determining that the intermediate transmission component has left the target position.

Optionally, before controlling the driving motor to rotate, the method further comprises: detecting whether a door lock is in an unlocked state; and
the controlling the driving motor to rotate comprises: controlling the driving motor to rotate when the door lock is in the unlocked state.

Optionally, before controlling the driving motor to rotate, the method further comprises: detecting whether the door lock is in an action state; and
the controlling the driving motor to rotate comprises: controlling the driving motor to rotate when the door lock is not in the action state.

Optionally, the automatic door-opening control method further comprises: determining whether the current state of the household appliance meets an unlocking condition when the door lock is not in the unlocked state, where the household appliance is an apparatus provided with the automatic door-opening device and the door lock;
determining that the current state of the household appliance meets the unlocking condition, and controlling the door lock to perform the unlocking action; and
detecting again whether the door lock is in the unlocked state after the door lock has completed the unlocking action.

Optionally, the household appliance is a clothing treatment apparatus; and the determining whether the current state of the household appliance meets an unlocking condition comprises:
if a water level in the clothing treatment apparatus is higher than a set water level, or a clothing treatment temperature of the clothing treatment apparatus is outside a safe temperature range, or the clothing treatment apparatus is in a rotating state, then determining that the current state of the clothing treatment apparatus does not meet the unlocking condition.

Optionally, the determining whether the current state of the household appliance meets an unlocking condition comprises:
detecting whether the household appliance has activated a child lock function; and
determining that the current state of the household appliance does not meet the unlocking condition when the household appliance has activated the child lock function.

Optionally, before controlling the driving motor to rotate, the method further comprises:
detecting whether the door is in a closed state; and
the controlling the driving motor to rotate comprises: controlling the driving motor to rotate when it is determined that the door is in the closed state.

In a second aspect, the present disclosure provides an automatic door-opening control device, for controlling the automatic door-opening device to achieve automatic opening of a door and the automatic door-opening device comprises a driving motor, a gear transmission mechanism, a door-opening actuator, and a position detection component; where the gear transmission mechanism comprises an intermediate transmission component, and the position detection component is used to detect the position of the intermediate transmission component; the device comprises a control unit, which is configured to control the driving motor to rotate after the control unit receives a door-opening trigger instruction, to control the position detection component to detect the position of the intermediate transmission component, and to control the driving motor to stop rotating after it is determined that the intermediate transmission component has moved from an initial position to a target position and then has left the target position.

In a third aspect, the present disclosure provides a household appliance, which comprises a controller and an automatic door-opening device; where the automatic door-opening device comprises a driving motor, a gear transmission mechanism, a door-opening actuator, and a position detection component; the gear transmission mechanism comprises an intermediate transmission component, and the position detection component is used to detect the position of the intermediate transmission component; and the controller adopts the automatic door-opening control method as described above to control the driving motor in the automatic door-opening device to act.

### (3) Advantageous effects

The above technical solutions provided in the present disclosure has the following advantages over the prior art.

By using the solutions in the embodiments of the present disclosure, after the controller receives the door-opening trigger instruction and controls the driving motor to rotate, it controls the driving motor to stop rotating only after the intermediate transmission component has moved to the target position and then has left the target position. Since the target position is a position that indicates the door-opening actuator has already achieved opening of the door, or the door-opening actuator can achieve opening of the door during the returning process, if it is determined that the intermediate transmission component has already left the target position, then it can be determined that the door has already been opened by the door-opening actuator. At this time, the driving motor can be controlled to stop rotating.

It should be understood that the above general description and the following detailed description are only illustrative and explanatory, and cannot limit the present disclosure.

### BRIEF DESCRIPTION OF THE DRAWINGS

The accompanying drawings herein are incorporated into the specification and form a part of the specification; they illustrate embodiments in accordance with the present disclosure and are used together with the specification to explain the principles of the present disclosure.

In order to provide a clearer explanation of the technical solutions in the embodiments of the present disclosure or in the prior art, the accompanying drawings required for the description of the embodiments or the prior art will be briefly introduced below. It is obvious that for those skilled in the art, other drawings can also be obtained based on these drawings without creative efforts, in which:
FIG. 1 is a flowchart of the automatic door-opening control method provided in an embodiment of the present disclosure;
FIG. 2 is a flowchart of the automatic door-opening control method provided in another embodiment of the present disclosure; and
FIG. 3 is a schematic diagram of the structure of the automatic door-opening control device provided in an embodiment of the present disclosure.

### DETAILED DESCRIPTION

The embodiments of the present disclosure will be described in greater detail below with reference to the accompanying drawings. Although certain embodiments of the present disclosure are shown in the accompanying drawings, it should be understood that the present disclosure may be implemented in various forms and should not be construed as being limited to the embodiments set forth herein. On the contrary, these embodiments are provided to enable a more thorough and complete understanding of the present disclosure. It should be understood that the drawings and embodiments of the present disclosure are for illustrative purpose only, and are not intended to limit the scope of protection of the present disclosure.

The term "comprise" and its variations used herein are inclusive, meaning "comprising but not limited to". The term "based" means "at least partially based on". The term "one embodiment" means "at least one embodiment". The term "another embodiment" means "at least one another embodiment". The term "some embodiments" means "at least some embodiments". The relevant definitions of other terms will be provided in the following description. It should be noted that the concepts such as "first" and "second" mentioned in the present disclosure are only used to distinguish different devices, modules, or units, and are not intended to limit the order or interdependence of the processes performed by these devices, modules, or units.

It should be noted that the modifications "one" and "multiple" mentioned in the present disclosure are illustrative rather than restrictive, and it should be understood by those skilled in the art that unless otherwise explicitly indicated in the context, they should be understood as "one or more".

In order to solve the problem that during door-opening control in existing automatic door-opening devices, after the position detection component detects that a specific transmission component in the transmission mechanism has moved to a target position, the driving motor runs for a set duration before being powered off, which may make the door fail to automatically open or the specific transmission component fail to reset correctly, an embodiment of the present disclosure provides a new automatic door-opening control method.

In order to have a clearer understanding of the automatic door-opening control method provided in the embodiment of the present disclosure, a brief introduction to the automatic door-opening device will be first provided below.

As generally introduced in the section of "BACKGROUND", an automatic door-opening device comprises a driving motor, a transmission mechanism, a door-opening actuator, and a position detection component. In addition, the automatic door-opening device is also provided with a rebound elastic member.

The driving motor is used to generate the power for driving the door-opening actuator to act.

The transmission mechanism is used to convert the rotational motion of the driving motor into other types of motion, and to amplify the torque generated when the driving motor rotates, so that a smaller power driving motor can be used to drive the door-opening actuator to act. In some embodiments, the transmission mechanism may be a gear transmission mechanism, which converts the rotational force generated by the driving motor into a larger torque rotational force through multiple gear transmission pairs. In some other embodiments, the transmission mechanism may also be a mechanism that can convert rotational motion into translational motion or swinging motion, such as a crank-slider mechanism and a crank-rocker mechanism.

In the embodiment of the present disclosure, an intermediate transmission component is provided in the transmission mechanism, and it can be a translational component, a swinging component, or a rotating component. In practical applications, considering that the transmission mechanism should save space as much as possible, the aforementioned intermediate transmission component is preferably configured as a translational component.

The door-opening actuator is a mechanism used to apply power to the door, thereby achieving opening of the door. In some embodiments, the door-opening actuator may be a cam mechanism that applies a force to the door latch through the rotation of the cam, and uses the door latch to drive the door to move and achieve automatic opening of the door.

The position detection component is used to detect the position of the intermediate transmission component in the aforementioned transmission mechanism, and determine the action state of the door-opening actuator through the position of the intermediate transmission component, thereby determining whether the automatic door-opening device has correctly performed the door-opening operation.

In specific implementation, the position detection component can be a Hall sensor, a distance detection sensor, or a mechanical switch, and it is preferred to use a two-state detection component such as a Hall switch and a mechanical switch. It should be noted that in a case where the distance detection sensor is a Hall switch, there should be a metal component or magnetic component at a specific position in the intermediate transmission component.

The rebound elastic member is used to reset the intermediate transmission component as well as the subsequent transmission mechanism and door-opening actuator, when the driving force generated by the driving motor cannot be applied to the intermediate transmission component.

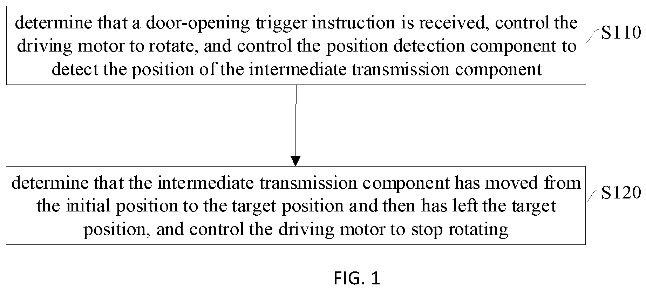

The following is an analysis of the automatic door-opening control method provided in the embodiment of the present disclosure. FIG. 1 is a flowchart of the automatic door-opening control method provided in the embodiment of the present disclosure. As shown in FIG. 1, the automatic door-opening control method provided in the embodiment of the present disclosure comprises S110 to S120.

It should be noted that the automatic door-opening control method provided in the embodiment of the present disclosure is controlled and executed by a controller in an apparatus in which the automatic door-opening device is installed. The above apparatus in which the automatic door-opening device is installed can be various types of household appliances, such as washing machines, dryers, and other clothing treatment apparatuses, or apparatuses such as microwave ovens and electric ovens.

S110: determining that a door-opening trigger instruction is received, controlling the driving motor to rotate, and controlling the position detection component to detect the position of the intermediate transmission component.

The door-opening trigger instruction is an instruction used to control the automatic door-opening device to perform the door-opening action. In some embodiments, the door-opening trigger instruction can be generated by the user by operating the apparatus in which the automatic door-opening device is installed, or it can be automatically generated by the controller of the apparatus in which the automatic door-opening device is installed after it is determined that the apparatus has completed specific program operations.

As analyzed earlier, the automatic door-opening device generates the power to open the door through the rotation of the driving motor, and the corresponding door-opening trigger instruction received is the instruction used to control the driving motor to rotate. In the embodiment of the present disclosure, after receiving the door-opening trigger instruction, the controller controls a switch connected in series with the driving motor to close, achieving current conduction in a circuit where the driving motor is located, and thereby controlling the driving motor to rotate.

In the embodiment of the present disclosure, while controlling the driving motor to rotate, the controller controls the position detection component to detect the position of the intermediate transmission component. Specifically, the controller can control the position detection component to be powered on, thereby enabling the position sensor to detect the position of the intermediate transmission component.

When the structure of the automatic door-opening device is normal, after the driving motor is powered on and starts rotating, the driving motor will drive the door-opening actuator to act through the transmission mechanism. At the same time as the transmission mechanism acts, the intermediate transmission component in the transmission mechanism moves from the initial position to the target position. The target position is a position that indicates the door-opening actuator has already achieved opening of the door, or the door-opening actuator can achieve opening of the door during the returning process. In some embodiments, when the door-opening actuator reaches the target position, or after it reaches the target position and stays for a period of time, it indicates that the door-opening actuator is open. It should be noted that the target position referred to in the embodiment of the present disclosure can be a position point or a position range.

In the embodiment of the present disclosure, when the intermediate transmission component moves to the target position or after it has moved to the target position for a period of time, the power generated by the driving motor cannot be applied to the intermediate transmission component due to changes in the connection relationship between the transmission components, and thus cannot be transmitted to the door-opening actuator through the intermediate transmission component. Subsequently, the elastic force generated by the compression of the rebound elastic member will be applied to the intermediate transmission component, causing it to move back and out of the target position.

S120: determining that the intermediate transmission component has moved from the initial position to the target position and then has left the target position, and controlling the driving motor to stop rotating.

As analyzed earlier, the target position is a position that indicates the door-opening actuator has already achieved opening of the door, or the door-opening actuator can achieve opening of the door during the returning process. That is, if the intermediate transmission component has moved from the initial position to the target position and then has left the target position, then it can be determined that the door-opening actuator has achieved opening of the door, and the driving motor can be controlled to stop rotating at this time.

By using the automatic door-opening control method provided in the embodiment of the present disclosure, after the controller receives the door-opening trigger instruction and controls the driving motor to rotate, it controls the driving motor to stop rotating only after the intermediate transmission component has moved to the target position and then has left the target position. Since the target position is a position that indicates the door-opening actuator has already achieved opening of the door, or the door-opening actuator can achieve opening of the door during the returning process, if it is determined that the intermediate transmission component has already left the target position, then it can be determined that the door has already been opened by the door-opening actuator. At this time, the driving motor can be controlled to stop rotating.

In the related art, when it is determined that the intermediate transmission component has moved to the target position, the motor is controlled to stop rotating, or when it is determined that the intermediate transmission component has moved to the target position and a certain period of time has passed, the driving motor is controlled to stop rotating. This may cause a problem that the intermediate transmission component is stuck in a non-initial position. Although the door-opening is not completed, the controller may mistakenly believe that the door-opening has been completed. By adopting the solution of the embodiment of the present disclosure, after it is detected that the intermediate transmission component has moved to the target position, further detection is carried out to determine whether the intermediate transmission component has left the target position. Only after the intermediate transmission component has left the target position will it be determined that the door-opening has been completed, ensuring that the automatic door-opening device completes a complete door-opening action, avoiding the problem of mistakenly believing that the door-opening has been completed in a case where the door-opening action is not completed, and improving the reliability of automatic door-opening.

As mentioned earlier, the position detection component in some embodiments of the present disclosure may be a real-time position detection component such as a distance detection sensor. In this case, the controller can determine the real-time position of the intermediate detection component based on a distance signal generated by the distance detection sensor, and then determine whether the intermediate transmission component has moved to the target position and whether it has left the target position.

In some other embodiments, the position detection component in the embodiment of the present disclosure may also be a two-state detection component such as a Hall switch. In this case, the position detection component detects the position of the intermediate transmission component, and determines that the intermediate transmission component has moved from the initial position to the target position and then has left the target position, which may comprise the following steps S121-S122.

S121: in response to a detection state of the position detection component switching from a first state to a second state, determining that the intermediate transmission component has moved from the initial position to the target position.

In the embodiment of the present disclosure, the first state is an output state when the position detection component is not triggered by the intermediate transmission component, and the second state is an output state when the position detection component is triggered by the intermediate transmission component. For example, in some embodiments, the first state may be a state of outputting a low level, and the second state may be a state of outputting a high level.

If the position detection component switches from the first state to the second state, it is determined that the position detection component has switched from a state not triggered by the intermediate transmission component to a state triggered by the intermediate transmission component, that is, the intermediate transmission component has moved to a position close to or even contacting with the position detection component. Since the aforementioned position is pre-set as the target position, it can be determined at this time that the intermediate transmission component has moved from its initial position to the target position.

S122: in response to the position detection component switching back from the second state to the first state, determining that the intermediate transmission component has left the target position.

If the detection state of the position detection component switches from the second state to the first state, it is determined that the position detection component has switched from the state triggered by the intermediate transmission component to the state no longer triggered by the intermediate transmission component. At this time, it is determined that the intermediate transmission component has left the target position.

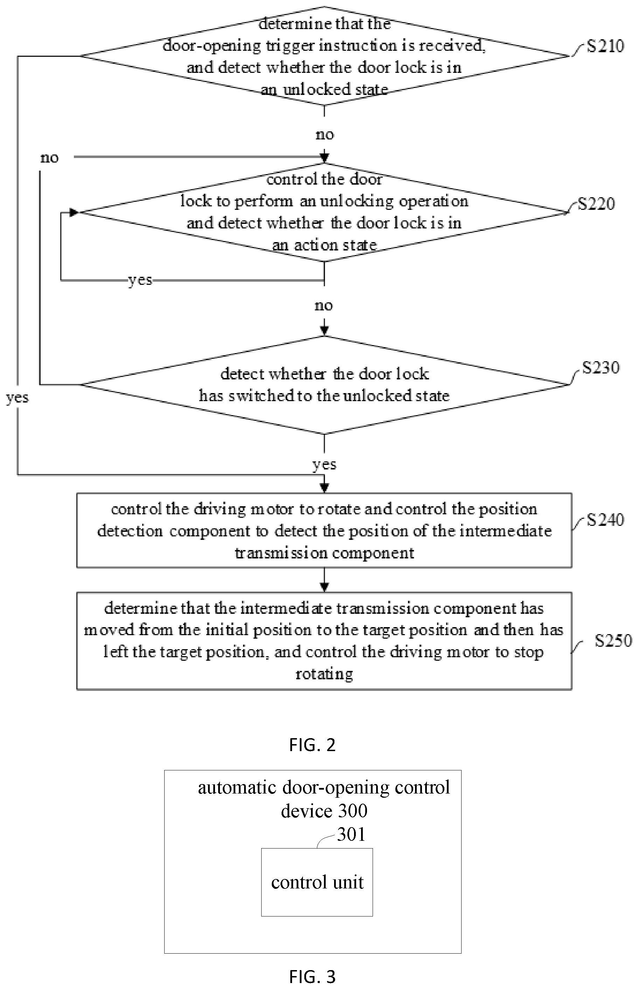

FIG. 2 is a flowchart of the automatic door-opening control method provided in another embodiment of the present disclosure. As shown in FIG. 2, the automatic door-opening control method provided in some other embodiments comprises S210-S250.

S210: determining that the door-opening trigger instruction is received, and detecting whether the door lock is in an unlocked state; if not, executing S220; and if yes, executing S240.

S220: controlling the door lock to perform an unlocking operation and detecting whether the door lock is in an action state; if yes, continuing the execution of S220; and if not, executing S230.

S230: detecting whether the door lock has switched to the unlocked state; if yes, executing S240; and if not, executing S220.

S240: controlling the driving motor to rotate and controlling the position detection component to detect the position of the intermediate transmission component.

S250: determining that the intermediate transmission component has moved from the initial position to the target position and then has left the target position, and controlling the driving motor to stop rotating.

In practical applications, in order to ensure the safety of household appliance during operation, the household appliance is provided with a lock, and the door lock is used to lock the door during operation, preventing the door from being opened under the action of strong force. For example, a drum washing machine will apply a door lock during operation, so that the door will not be opened due to internal thrust or external pulling force.

In order to avoid conflicts between the working state of the automatic door-opening device and the locked state of the door lock during the process of performing the door-opening operation, in the embodiment of the present disclosure, after the door-opening trigger instruction is received, it is first detected whether the door lock is in the unlocked state.

If the door lock is in the unlocked state, the automatic door-opening device can be controlled to perform the door-opening action, that is, the driving motor is controlled to rotate and the position detection component is controlled to detect the position of the intermediate transmission component.

If the door lock is not in the unlocked state, it may be in two states: (1) the door lock is in the locked state; and (2) the door lock is in the action state, which may be the action state from being locked to being unlocked, or from being unlocked to being locked.

In the embodiment of the present disclosure, when it is determined that the door lock is not in the unlocked state, the door lock is controlled to perform the unlocking operation, that is, the door lock is controlled to perform the action of switching from the locked state to the unlocked state. At this time, it can be detected whether the door lock is in the action state. If the door lock is in the action state, it cannot be determined whether the door lock has been successfully unlocked, so it is still necessary to detect whether it is in the action state. If the door lock has completed the unlocking action, in order to avoid problems of unlocking errors or unsuccessful unlocking, it is then necessary to confirm again whether the door lock has been successfully unlocked, that is, to determine whether the door lock has been successfully unlocked. Therefore, the driving motor can be controlled to rotate, and the position detection component can be controlled to detect the position of the intermediate transmission component, so as to determine whether the automatic door-opening operation has been correctly performed.

The specific implementation method of S240-S250 in the embodiment of the present disclosure is the same as that in the previous embodiment, and a repeated description will be omitted herein. For specific details, reference may be made to the previous analysis.

As analyzed earlier, the door lock is used to ensure the safety of household appliance during use, and it is locked when it is determined that the household appliance is in operation. In practical applications, if the door lock is controlled to perform the unlocking operation after the door-opening trigger instruction is received and it is detected that the door lock is not in the unlocked state, a safety accident may occur. In order to avoid this problem, in some embodiments, the controller will also execute the following S250 before executing the aforementioned S220.

S250: determining whether the current state of the household appliance meets the unlocking condition; and if yes, executing S220.

The aforementioned household appliance is a component in which the lock and the automatic door-opening device are installed. Whether the current state of the household appliance meets the unlocking condition needs to be determined based on the state of the operation being performed by the household appliance.

In some embodiments, the household appliance is a clothing treatment apparatus, such as a washing machine, a dryer, and a washing-drying integrated machine, which are similar to each other. The aforementioned determination of whether the current state of the household appliance meets the unlocking condition will vary accordingly.

For example, in a case where the household appliance is a washing machine, if it is determined that a water level of the clothing treatment apparatus is higher than a set water level, or if the clothing treatment apparatus is in a rotating state, then it is determined that the current state of the clothing treatment apparatus does not meet the unlocking condition.

For another example, in a case where the household appliance is a dryer, if it is determined that the clothing treatment temperature in the dryer is within a safe temperature range, then it is determined that the current state does not meet the unlocking condition.

In some other embodiments, in a case where the household appliance is a microwave oven, if it is determined that the microwave oven is in a microwave heating state, then it is determined that the current state does not meet the unlocking condition.

Herein, it should be noted that if multiple judgment conditions are comprised in determining whether the current state of the household appliance meets the unlocking condition, the unlocking operation cannot be performed as long as one of the judgment conditions does not meet the unlocking conditions. In other words, the unlocking operation can only be performed if all the unlocking conditions are met.

In practical applications, if the current state of the household appliance does not meet the unlocking conditions, in order to avoid the user thinking that the appliance is faulty, corresponding prompt information can be generated at this time to prompt the user what operation needs to be performed, or which state of the household appliance needs to be waited for before performing the unlocking and door-opening operation.

In some embodiments, although the current state of the household appliance meets the unlocking conditions, in order to avoid various problems caused by children triggering opening of the door, the household appliance may activate a child lock function. At this time, before executing the aforementioned S220, the controller also needs to execute the following S260.

S260: detecting whether the clothing treatment apparatus has activated a child lock function; and if not, executing S220.

If the clothing treatment apparatus has activated the child lock function, the lock is in a locked state at this time, and the clothing treatment apparatus cannot be controlled to perform the unlocking operation. At this time, corresponding prompt information can be generated to prompt the user that the child lock function is currently activated, and unlocking and door-opening operations can only be performed after the child lock is released.

In some embodiments, generation of the door-opening trigger instruction may be triggered by the user. In this case, the door may already be in the open state. In specific implementation, a pressure sensor can be provided in the door of the household appliance to detect whether the door is in the open state or the closed state. If the automatic door-opening device is still controlled to act while the door is in the open state, a resulting door-opening force may not be able to be released to the door, causing internal absorption in the automatic door-opening device and resulting in structural damage to the automatic door-opening device. In order to avoid this problem, before executing S240 to control the driving motor to rotate, the following S270 may also be executed.

S270: detecting whether the door is in the closed state; and if yes, executing S240.

Detecting whether the door is in the closed state is to obtain the state information output by the aforementioned pressure sensor and determine whether the door is in the open state or the closed state.

In addition to providing the aforementioned automatic door-opening control method, an embodiment of the present disclosure also provides an automatic door-opening control device.

FIG. 3 is a schematic diagram of the structure of the automatic door-opening control device provided in the embodiment of the present disclosure. As shown in FIG. 3, the automatic door-opening control device 300 provided in the embodiment of the present disclosure comprises a control unit 301.

The control unit 301 is configured to control the driving motor to rotate after receiving the door-opening trigger instruction, control the position detection component to detect the position of the intermediate transmission component, and control the driving motor to stop rotating after it is determined that the intermediate transmission component has moved from the initial position to the target position and then has left the target position.

In some embodiments, the position detection component is a two-state detection component; in response to the detection state of the position detection component switching from the first state to the second state, the controller determines that the intermediate transmission component has moved from the initial position to the target position; and in response to the detection state of the position detection component switching back from the second state to the first state, the controller determines that the intermediate transmission component has left the target position.

In some embodiments, the automatic door-opening control device 300 further comprises a detection unit. Before the driving motor is controlled to rotate, the detection unit detects whether the door lock is in the unlocked state; and when the door lock is in the unlocked state, the control unit 301 controls the driving motor to rotate.

In some embodiments, before the driving motor is controlled to rotate, the detection unit detects whether the door lock is in the action state. When the door lock is not in the action state, the control unit 301 controls the driving motor to rotate.

In some embodiments, when the door lock is not in the unlocked state, the control unit 301 first determines whether the current state of the household appliance meets the unlocking condition. The household appliance is an apparatus provided with the automatic door-opening device and the door lock. When it is determined that the current state of the household appliance meets the unlocking condition, the control unit 301 controls the door lock to perform the unlocking action. After the door lock has completed the unlocking action, it is detected again whether the door lock is in the unlocked state, and the driving motor is controlled to rotate after it is determined that the door lock is in the unlocked state.

In some embodiments, the household appliance is a clothing treatment apparatus; and the control unit 301 determines that the current state of the clothing treatment apparatus does not meet the unlocking conditions when the water level in the clothing treatment apparatus is higher than a set water level, or when the clothing treatment temperature of the clothing treatment apparatus is outside a safe temperature range, or when the clothing treatment apparatus is in a rotating state.

In some embodiments, the control unit 301 will detect whether the household appliance has activated the child lock function. When the household appliance has activated the child lock function, the control unit 301 determines that the current state of the household appliance does not meet the unlocking conditions.

In some embodiments, before controlling the driving motor to rotate, the control unit 301 first detects whether the door is in the closed state. When it is determined that the door is in the closed state, the control unit 301 controls the driving motor to rotate.

In addition to providing the aforementioned automatic door-opening control method and automatic door-opening control device 300, an embodiment of the present disclosure also provides a household appliance. The household appliance comprises a door, a controller, and an automatic door-opening device. The automatic door-opening device comprises the driving motor, the gear transmission mechanism, the door-opening actuator, and the position detection component as described above. The gear transmission mechanism comprises an intermediate transmission component, and the position detection component is used to detect the position of the intermediate transmission component. The controller adopts the automatic door-opening control method mentioned earlier to control the driving motor of the automatic door-opening device to act.

In specific implementation, the controller can be a central processing unit (CPU) or other forms of processing units with data processing and/or instruction execution capabilities, and it can control other components in a water heating device to perform desired functions.

An embodiment of the present disclosure also provides a storage medium, on which programs or instructions are stored, and the programs or instructions enable a computer to execute any of the automatic door-opening control methods provided in the embodiments of the present disclosure. The computer executable instructions, when executed by a computer controller, can also be used to execute any of the above automatic door-opening control methods provided in the embodiments of the present disclosure to achieve corresponding advantageous effects.

Through the above description of the embodiments, it can be clearly understood by those skilled in the art that the embodiments of the present disclosure can be implemented with the help of software and necessary general hardware; of course, they can also be implemented through hardware. However, in many cases, the former is a better implementation. Based on this understanding, the technical solutions in the embodiments of the present disclosure (or essentially, the parts that make contribution to the prior art) can be embodied in the form of software products, which can be stored in computer-readable storage media such as floppy disk, Read Only Memory (ROM), Random Access Memory (RAM), flash memory, hard disk, or optical disk of the computer, which comprise several instructions for a computer device (which may be a personal computer, a server, or a network device, etc.) to execute the methods in various embodiments of the present disclosure.

Described above are only specific embodiments of the present disclosure, which enable those skilled in the art to understand or implement the present disclosure. Various modifications to these embodiments will be apparent to those skilled in the art, and the general principles defined herein can be implemented in other embodiments without departing from the spirit or scope of the present disclosure. Therefore, the present disclosure will not be limited to the embodiments disclosed herein, but will be accorded with the widest scope consistent with the principles and novel features disclosed herein.

### Industrial applicability

In the automatic door-opening control method and device, and the household appliance provided in the present disclosure, the automatic door-opening control method is used to control the automatic door-opening device to achieve automatic opening of the door. After receiving the door-opening trigger instruction and controlling the driving motor to rotate, the controller will control the driving motor to stop rotating only after the intermediate transmission component has moved to the target position and then has left the target position. Since the target position is a position that indicates the door-opening actuator has already achieved opening of the door, or the door-opening actuator can achieve opening of the door during the returning process, if it is determined that the intermediate transmission component has already left the target position, then it can be determined that the door has already been opened by the door-opening actuator. At this time, the driving motor can be controlled to stop rotating, which achieves strong industrial practicality.

## Claims

1. An automatic door-opening control method, for controlling an automatic door-opening device to achieve automatic opening of a door; wherein the automatic door-opening device comprises a driving motor, a transmission mechanism, a door-opening actuator, and a position detection component; the transmission mechanism comprises an intermediate transmission component, and the position detection component is used to detect a position of the intermediate transmission component; and the control method comprises:
determining that a door-opening trigger instruction is received, controlling the driving motor to rotate, and controlling the position detection component to detect the position of the intermediate transmission component; and
determining that the intermediate transmission component has moved from an initial position to a target position and then has left the target position, and controlling the driving motor to stop rotating.

2. The control method according to claim 1, wherein the position detection component is a two-state detection component;
the determining that the intermediate transmission component has moved from the initial position to the target position and then has left the target position comprises:
in response to a detection state of the position detection component switching from a first state to a second state, determining that the intermediate transmission component has moved from the initial position to the target position; and
in response to the position detection component switching back from the second state to the first state, determining that the intermediate transmission component has left the target position.

3. The control method according to claim 1 or 2, wherein before controlling the driving motor to rotate, the control method further comprises:
detecting whether a door lock is in an unlocked state; and
the controlling the driving motor to rotate comprises: controlling the driving motor to rotate when the door lock is in the unlocked state.

4. The control method according to claim 3, wherein before controlling the driving motor to rotate, the control method further comprises:
detecting whether the door lock is in an action state; and
the controlling the driving motor to rotate comprises: controlling the driving motor to rotate when the door lock is not in the action state.

5. The control method according to claim 3, further comprising:
determining whether a current state of a household appliance meets an unlocking condition when the door lock is not in the unlocked state, wherein the household appliance is an apparatus provided with the automatic door-opening device and the door lock;
determining that the current state of the household appliance meets the unlocking condition, and controlling the door lock to perform an unlocking action; and
detecting again whether the door lock is in the unlocked state after the door lock has completed the unlocking action.

6. The control method according to claim 5, wherein the household appliance is a clothing treatment apparatus; and
the determining whether the current state of the household appliance meets the unlocking condition comprises:
if a water level in the clothing treatment apparatus is higher than a set water level, or a clothing treatment temperature of the clothing treatment apparatus is outside a safe temperature range, or the clothing treatment apparatus is in a rotating state, then determining that the current state of the clothing treatment apparatus does not meet the unlocking condition.

7. The control method according to claim 5, wherein the determining whether the current state of the household appliance meets the unlocking condition comprises:
detecting whether the household appliance has activated a child lock function;
and
determining that the current state of the household appliance does not meet the unlocking condition when the household appliance has activated the child lock function.

8. The control method according to claim 1 or 2, wherein before controlling the driving motor to rotate, the control method further comprises:
detecting whether the door is in a closed state; and
the controlling the driving motor to rotate comprises: controlling the driving motor to rotate when it is determined that the door is in the closed state.

9. An automatic door-opening control device, for controlling the automatic door-opening device to achieve automatic opening of a door, wherein the automatic door-opening device comprises a driving motor, a gear transmission mechanism, a door-opening actuator, and a position detection component; the gear transmission mechanism comprises an intermediate transmission component, and the position detection component is used to detect a position of the intermediate transmission component; and the control device comprises a control unit;
the control unit is configured to control the driving motor to rotate after the control unit receives a door-opening trigger instruction, to control the position detection component to detect a position of the intermediate transmission component, and to control the driving motor to stop rotating after it is determined that the intermediate transmission component has moved from an initial position to a target position and then has left the target position.

10. A household appliance, comprising a controller and an automatic door-opening device; wherein the automatic door-opening device comprises a driving motor, a gear transmission mechanism, a door-opening actuator, and a position detection component; the gear transmission mechanism comprises an intermediate transmission component, and the position detection component is used to detect a position of the intermediate transmission component; and the controller adopts an automatic door-opening control method according to any one of claims 1 to 8 to control the driving motor in the automatic door-opening device to act.
